# FASCICULE DE BREVET EUROPEEN

(11) **EP 0 813 001 B1**
(45) Date de publication et mention de la délivrance du brevet: **12.12.2001**
(21) Numéro de dépôt: 97109496.6
(22) Date de dépôt: 11.06.1997
(51) Int. Cl.: F16F 15/139, F16F 15/134

(54) **Volant amortisseur, notamment pour véhicules automobiles**
Dämpfendes Schwungrad, insbesondere für Kraftfahrzeuge
Damping flywheel, especially for motor vehicles

(30) Priorité: 14.06.1996 FR 9607437
(43) Date de publication de la demande: 17.12.1997
(73) Titulaire: VALEO, 75017 Paris (FR)
(72) Inventeur: Duclos, Didier, 77330 Ozoir-La-Ferriere (FR); Mokdad, Ayman, 93400 Saint-Ouen (FR)
(74) Mandataire: Gamonal, Didier

(56) Documents cités:
- WO-A-95/17618
- DE-A- 3 629 225
- DE-A- 3 706 883
- DE-A- 3 721 712

## Description

La présente invention concerne un volant amortisseur, notamment pour véhicules automobiles.

Plus précisément, la présente invention concerne un volant amortisseur, notamment pour véhicules automobiles, comportant deux masses coaxiales montées mobiles l'une par rapport à l'autre à l'encontre, d'une part, de moyens élastiques comportant au moins un organe élastique intervenant globalement radialement entre lesdites masses et monté à articulation sur l'une et l'autre de celles-ci, et, d'autre part, de moyens de frottement à action axiale, dans lequel l'une des masses, dite première masse, est propre à être calée en rotation sur un arbre menant, tandis que l'autre des masses constitue le plateau de réaction d'un embrayage, les deux masses étant montées mobiles l'une par rapport à l'autre à l'aide d'un palier, lesdits moyens de frottement à action axiale étant adaptés à coopérer en frottement avec au moins une face de frottement solidaire de l'une des masses.

Un volant amortisseur de ce genre est par exemple décrit dans la publication SAE 95 0893.

La présente invention a pour but de réduire le nombre de pièces et de simplifier le montage des moyens de frottement.

Ainsi, selon l'invention, un volant amortisseur, notamment pour véhicules automobiles, comportant deux masses coaxiales montées mobiles l'une par rapport à l'autre à l'encontre, d'une part, de moyens élastiques comportant au moins un organe élastique intervenant globalement radialement entre lesdites masses et monté à articulation sur l'une et l'autre de celles-ci, et, d'autre part, de moyens de frottement à action axiale, dans lequel l'une des masses, dite première masse, est propre à être calée en rotation sur un arbre menant, tandis que l'autre des masses constitue le plateau de réaction d'un embrayage, les deux masses étant montées mobiles l'une par rapport à l'autre à l'aide d'un palier, lesdits moyens de frottement à action axiale étant adaptés à coopérer en frottement avec au moins une face de frottement solidaire de l'une des masses et les moyens de frottement comprenant des premiers moyens de frottement et des seconds moyens de frottement, les premiers moyens de frottement étant proches de l'axe de l'ensemble au voisinage dudit palier, est caractérisé par le fait que les moyens de frottement sont portés en majeure partie par l'une des masses et les premiers moyens de frottement comprennent une rondelle pour la mise en oeuvre des seconds moyens de frottement, ladite rondelle étant adaptée à être entraînée en rotation par l'autre des masses.

Grâce à l'invention, la rondelle commande les deux moyens de frottement de manière simple et économique. Cela permet d'occuper au mieux la place disponible sans augmenter l'encombrement du volant amortisseur

De préférence, l'une des masses est la première masse et ladite l'autre des masses est la seconde masse. Les moyens de frottement sont ainsi éloignés du plateau de réaction et ménagés.

Avantageusement, les premiers et les seconds moyens de frottement comprennent chacun une rondelle élastique à action axiale ; la charge de la rondelle élastique associée aux premiers moyens de frottement est inférieure à la charge de la rondelle élastique associée aux seconds moyens de frottement. Cela permet de bien filtrer les vibrations et de différencier les moyens de frottement.

De préférence, les seconds moyens de frottement comprennent une rondelle de frottement appliquée contre ladite face de frottement par l'intermédiaire d'une rondelle d'application solidaire en rotation de ladite l'une des masses ; ladite rondelle des premiers moyens de frottement et ladite rondelle de frottement comportent des moyens d'engrènement. Les seconds moyens de frottement peuvent intervenir ainsi de manière différée.

Comme on le sait, il est intéressant pour amortir les vibrations de créer un frottement permanent, généralement faible, pour amortir les vibrations dans la plage du ralenti moteur, et, au-delà de cette plage de ralenti, de créer un frottement de plus grande intensité. Les dispositions selon l'invention permettent d'obtenir facilement un tel résultat ; il suffit en effet que les moyens d'engrènement de ladite rondelle des premiers moyens de frottement et de ladite rondelle de frottement des seconds moyens de frottement engrènent avec un jeu circonférentiel.

Avantageusement, les seconds moyens de frottement sont placés axialement entre ladite face de frottement et les moyens élastiques.

De préférence, la rondelle des premiers moyens de frottement est sollicitée axialement par l'intermédiaire d'une rondelle d'application vers ladite face de frottement ; des rondelles de frottement sont disposées de part et d'autre de la rondelle des premiers moyens de frottement. La rondelle est ainsi pincée, ce qui facilite le montage du volant amortisseur.

Avantageusement, les moyens élastiques sont montés à articulation à l'aide de moyens d'articulation en forme d'axes portés par chacune des deux masses ; la rondelle des premiers moyens de frottement est entraînée en rotation par l'extrémité des axes les plus proches de l'axe de l'ensemble ; ladite rondelle est entraînée en rotation par un flasque transversal qu'elle présente, ses moyens d'engrènement étant prévus à l'extrémité externe de son bord qui est déporté axialement par rapport audit flasque.

De préférence, la première masse est solidarisée en rotation avec l'arbre menant par des vis, les seconds moyens de frottement sont disposés radialement au-delà desdites vis et la seconde masse et la rondelle présentent des passages pour le passage d'un outil de serrage ou desserrage des vis. Toutes ces dispositions permettent de monter par avance les moyens de frottement sur la première masse, puis de monter la seconde masse avec ses axes sur la première masse et enfin de fixer le volant amortisseur sur l'arbre menant.

La description qui va suivre illustre l'invention en regard des dessins annexés dans lesquels :
- la figure 1 est une vue partielle en coupe transversale d'un volant amortisseur selon l'invention ;
- la figure 2 en est une vue en coupe axiale selon II-II de la figure 1 ;
- la figure 3 est une vue partielle à plus grande échelle de la figure 2 ;
- la figure 4 est une vue partielle analogue à la figure 3 montrant une variante de volant selon l'invention.

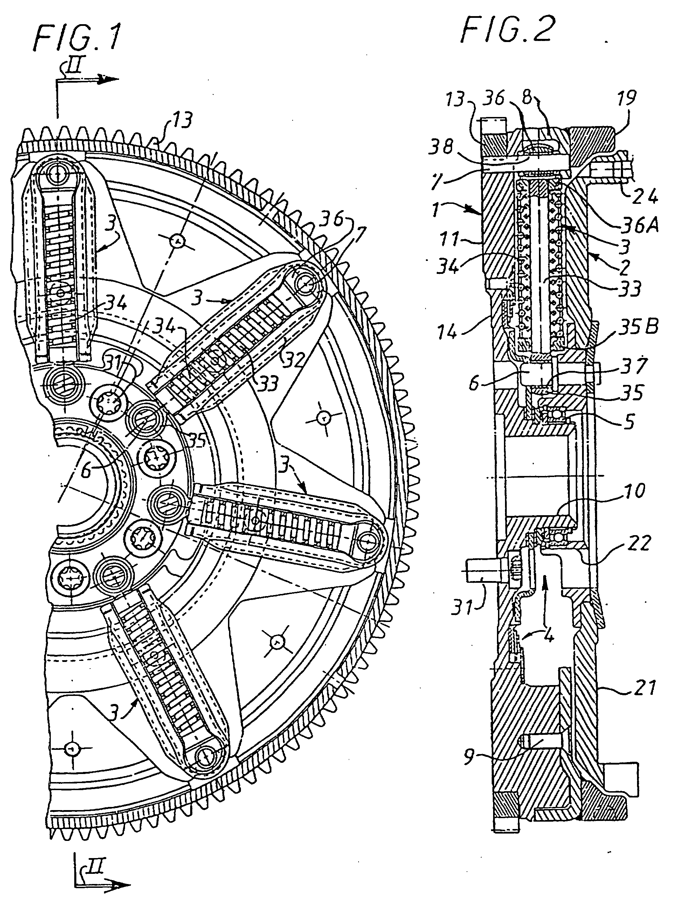

Sur les figures 1 à 3, est illustré un volant amortisseur, dénommé usuellement double volant amortisseur, pour véhicules automobiles.

Ce volant amortisseur comporte deux parties coaxiales 1, 2 ou masses montées mobiles l'une par rapport à l'autre à l'encontre de moyens élastiques 3 globalement à action radiale.

La première masse 1 est destinée à être calée en rotation sur un arbre menant, ici sur le vilebrequin (non visible) du moteur à combustion interne du véhicule.

La seconde masse 2 est destinée à être calée en rotation sur un arbre mené, ici l'arbre d'entrée de la boîte de vitesses (non visible) du véhicule automobile.

Cette seconde masse 2 est montée tourillonnante sur un moyeu tubulaire 10 porté centralement par la première masse 1.

La première masse 1 est ici en matière moulable avantageusement en fonte pour augmenter l'inertie du volant amortisseur. En variante elle peut être à base d'aluminium, le choix de la matière dépendant des applications.

Cette première masse 1 comporte un plateau 11 portant à sa périphérie externe une couronne de démarreur 13 propre à être entraînée par le démarreur du véhicule.

Ce plateau 11 est doté à sa périphérie externe d'un rebord cylindrique 19 d'orientation axiale. La plateau il est plus massif à sa périphérie externe et comporte à sa périphérie interne une portion interne 14 d'épaisseur réduite en forme de flasque.

Ici le moyeu 10 est étagé et est d'un seul tenant avec cette portion interne 14 et constitue ainsi la partie centrale de la première masse 1. En variante le moyeu 10 peut être rapporté sur cette portion interne 14.

La seconde masse 2 est montée tournante sur la masse 1 par l'intermédiaire d'un palier 5 et constitue le plateau de réaction d'un embrayage à friction comportant, de manière connue en soi, un disque de friction, un plateau de pression, un diaphragme et un couvercle non visibles.

Le diaphragme, de manière connue en soi, prend appui sur le couvercle, adapté à être rapporté ici sur un rebord périphérique cylindrique d'orientation axiale 24 que présente la seconde masse 2 à sa périphérie externe, pour action sur le plateau de pression et serrage des garnitures de frottement du disque de friction entre ledit plateau de pression et la seconde masse 2 présentant à cet effet une face de friction 21 pour le disque de friction. Ce disque de friction est doté à sa périphérie interne d'un moyeu non visible calé en rotation sur l'arbre d'entrée de la boîte de vitesses.

Le diaphragme de l'embrayage est adapté à être actionné, de manière connue en soi, par une butée de débrayage (non visible). Normalement, l'embrayage est engagé et le disque de friction est serré entre la seconde masse 2 et le plateau de pression de l'embrayage. Pour désengager l'embrayage, il suffit d'agir à l'aide de la butée de débrayage pour faire pivoter celui-ci. La seconde masse 2 est donc calée en rotation de manière débrayable sur l'arbre mené par l'intermédiaire de l'embrayage à friction et est ici en fonte.

Ici le palier 5 consiste en un roulement à billes de taille réduite. En variante, il peut s'agir d'un palier lisse. Le roulement 5 est interposé radialement entre le moyeu 10 de la première masse 1 et la périphérie interne (l'alésage interne) de la seconde masse 2.

Le moyeu 10 est épaulé, ainsi que l'alésage interne de la deuxième masse 2.

Le calage axial du roulement 5 est réalisé grâce auxdits épaulements et à des circlips, tels que le circlips 16, engagés dans des gorges pratiquées dans le moyeu 10 et dans la seconde masse 2. Ce roulement 5 s'étend radialement en dessous de passages 22 prévus dans la seconde masse 2 pour passage du ou des outils de vissage des vis 31, ici à tête creuse, de fixation du volant amortisseur sur le vilebrequin. Les passages 22 sont donc en coïncidence avec les trous pratiqués dans la portion interne 14 pour le passage des filetages des vis 31.

Les deux masses 1, 2 sont montées mobiles l'une par rapport à l'autre à l'encontre, d'une part, de moyens élastiques 3 comportant au moins un organe élastique 34 intervenant globalement radialement entre lesdites masses et monté à articulation sur l'une et l'autre de celles-ci, et, d'autre part, de moyens de frottement à action axiale 4.

Ici plusieurs moyens élastiques 3 sont prévus. Les organes élastiques 34, ici en forme de ressorts à boudin, sont logés à l'intérieur d'un boîtier 32 comprenant une pièce d'articulation 36 formant rotule immobilisée à l'extrémité externe du boîtier 32 : pour ce faire, celui-ci est réalisé, à partir d'une tôle pliée, à la manière d'une épingle à cheveux partiellement enroulée autour de la pièce d'articulation 36 qui comporte un trou cylindrique pour montage de moyens d'articulation 7 sur la première masse 1.

Les organes élastiques 34 entourent une tige 33 munie d'une pièce d'articulation 35 qui comporte un trou cylindrique pour montage de moyens d'articulation 6 sur la seconde masse 2.

Les organes élastiques 34 prennent appui, d'un côté, sur une pièce de butée 36A solidaire de la tige 33 et en appui sur la pièce d'articulation 36 et, de l'autre côté, sur une bague d'appui 35B solidaire du boîtier 32 à son extrémité opposée à celle qui entoure la pièce d'articulation 36, ladite bague d'appui 35B étant montée coulissante sur la tige 33.

Les pièces d'articulation 35 et 36 sont décalées radialement l'une par rapport à l'autre et il en est de même des moyens d'articulation 6 et 7, qui ici sont radialement alignés. En variante un léger décalage circonférentiel peut exister. Les moyens élastiques 3 sont donc globalement à action radiale.

Ici les moyens d'articulation 6 et 7 consistent en des axes. Les axes 7 sont implantés à la périphérie externe de la première masse 1, tandis que les axes 6 sont implantés à la périphérie interne de la seconde masse 2, ici radialement au-dessus des passages 22 des vis de fixation 31, au voisinage desdits passages.

Ici les pièces d'articulation 35 et 36 sont trouées chacune pour montage de manchons ou tubes respectivement 37, 38 enfilés dans lesdits trous. Le manchon 37 est solidaire, par exemple par soudage ou collage, de la pièce d'articulation 35, tandis que le manchon 38 est solidaire, par exemple par soudage ou collage, de la pièce d'articulation 36.

Un revêtement est prévu dans l'alésage interne de chaque manchon 37, 38 et forme ainsi un palier pour l'axe 6 et l'axe 7 respectivement.

L'axe 7 est emmanché à force dans la première masse 1 à la périphérie externe de celle-ci et s'étend axialement en direction de la seconde masse 2. Son extrémité libre est emmanchée dans une pièce 8 fixée à l'aide de vis 9 sur le plateau 11 de la première masse 1. La pièce 8 rigidifie la première masse 1 en étant adjacente à la seconde masse 2. Elle porte à fixation, ici par soudage, une masse 19 entourant la masse 2 pour augmentation de l'inertie.

Le manchon 38 est interposé axialement entre le plateau 11 et cette pièce 8. Il est formé ainsi une chape pour le montage de l'axe 7, qui est ainsi bien soutenu. Ce montage permet également un calage axial des boîtiers 32.

Les moyens de frottement 4 à action axiale interviennent également entre les deux masses 1 et 2.

Les moyens de frottement 4 comprennent des premiers moyens de frottement 40 et des seconds moyens de frottement 50 comportant une rondelle de frottement 51.

Les premiers moyens de frottement 40, de conception générale annulaire, sont interposés axialement entre le palier 5 et une face 15 de frottement que présente, à proximité de la périphérie du moyeu tubulaire 10, la portion interne 14 du plateau de la première masse 1 sont disposés successivement axialement depuis ladite face de frottement 15 : une rondelle de frottement 41, un flasque transversal 26 dont est munie une rondelle 25, une autre rondelle de frottement 42, une rondelle d'application 43 et une rondelle élastique 44. Les premiers moyens de frottement 40 entourent le moyeu 10, étagé en diamètre à cet effet.

Le flasque transversal 26 de la rondelle 25 comporte des trous 27 recevant les extrémités 17 des axes 6 tournées vers la première masse 1 grâce à cette disposition, la rondelle 25 est solidaire en rotation de la seconde masse 2, tout en pouvant se déplacer axialement par rapport à elle.

L'empilage axial ci-dessus est serré contre la face de frottement 15 par la rondelle élastique 44 qui prend appui contre une butée 16, ici le circlips précité qui cale axialement la bague interne du roulement à billes constituant le palier 5.

La portion interne 14 du plateau 11 offre une face de frottement 30, tournée vers la seconde masse 2, à la rondelle de frottement 51, ici en matière synthétique renforcée par des fibres. Cette rondelle de frottement 51 présente à sa périphérie interne une protubérance 52, dirigée axialement vers la seconde masse 2 pour définir une surépaisseur.

La rondelle de frottement 51 est soumise à l'action d'une rondelle d'application 53 sur laquelle agit un moyen élastique à action axiale 54 prenant appui sur une plaque 39, ici métallique, en forme de couronne solidaire de la première masse 1 ; cette couronne 39 est fixée à l'aide de vis 49 sur la première masse 1. Il est formé ainsi une boucle d'action et de réaction au sein de la première masse 1 ; un jeu axial existe entre la couronne 39 et les moyens élastiques 3.

La rondelle d'application 53 présente des échancrures qui coopèrent avec des cannelures longitudinales 48 qui bordent radialement la face de frottement 30 et qui servent à son entraînement en rotation, avec ou sans jeu, par la première masse 1. Il en est de même en ce qui concerne la rondelle d'application 43, le moyeu 10 présentant des cannelures 12 et la rondelle 43 des échancrures à sa périphérie interne.

Des moyens d'engrènement 47, 57, respectivement, sont portés en vis-à-vis par la périphérie externe de la rondelle 25 et la périphérie interne de la rondelle de frottement 51 pour l'entraînement en rotation, avantageusement après absorption d'un jeu circonférentiel, de la rondelle de frottement 51 par la rondelle 25. Plus précisément, les moyens d'engrènement 57 de la rondelle de frottement 51 sont prévus dans la protubérance 52 que présente celle-ci, en vue de minimiser l'usure éventuelle de ceux-ci ; les moyens d'engrènement 47 de la rondelle 25 sont prévus à l'extrémité externe d'un bord 28 qu'elle présente et qui est déporté axialement, en direction de la première masse 1, par rapport à son flasque 26 transversal placé entre les rondelles de frottement 41 et 42 des premiers moyens de frottement 40.

Il résulte de la description qui précède que les premiers moyens de frottement 40 sont implantés radialement en dessous des passages 22, tandis que les seconds moyens de frottement 50 sont implantés radialement au-dessus desdits passages 22. La rondelle 25 faisant partie à la fois des premiers 40 et seconds 50 moyens de frottement, elle présente des passages 29 placés au droit des passages 22 pour l'accessibilité des vis 31 par un outil de serrage.

Ainsi les boîtiers 32 s'inclinent lors du mouvement relatif entre les deux masses 1, 2, les organes élastiques 34 sont comprimés et la rondelle 25 est entraînée en rotation par l'extrémité 17 des axes 6. Les moyens élastiques 3 sont ainsi globalement à action radiale. Cette rondelle 25 étant serrée entre la rondelle d'application 43 et la face de frottement 15 du plateau 11, avec interposition de part et d'autre des rondelles de frottement 41, 42, il se produit un mouvement relatif et un frottement, taré par le moyen élastique à action axiale 44, entre la rondelle 25 et les faces concernées de la rondelle d'application 43 et de la portion interne 14 solidaire de la première masse.

Le jeu circonférentiel entre les moyens d'engrènement 47, 57 ayant été rattrapé et le mouvement relatif entre les deux masses 1, 2 se poursuivant, la rondelle 25 entraîne la rondelle de frottement 51 qui frotte alors, d'une part, sur la face de frottement 30 et, d'autre part, sur la face concernée de la rondelle d'application 53, frottement qui est taré par le moyen élastique 54 et qui vient s'ajouter au frottement précédent dû aux rondelles de frottement 41 et 42.

Ainsi qu'on l'aura compris, les moyens d'engrènement 47, 57 intervenant entre la rondelle de frottement 51 et la rondelle 25 comportent une alternance de dents et d'échancrures, les dents de la première rondelle pénétrant ici à jeu dans les échancrures de la seconde rondelle et vice-versa. Pour ce faire, il est avantageux que la rondelle de frottement 51 soit en matière synthétique moulable, ce qui permet aisément d'épaissir ladite rondelle au niveau des moyens d'engrènement 57 comme visible sur les figures.

De préférence, la charge des moyens élastiques à action axiale 44, ici une rondelle élastique 44, associés aux premiers moyens de frottement 40, est inférieure à la charge des moyens élastiques 54, ici une rondelle élastique, associés aux seconds moyens de frottement 50 implantée radialement au-delà des premiers moyens de frottement 40.

Cette disposition, en combinaison avec les moyens d'engrènement 47, 57 à jeu circonférentiel, permet de bien amortir les vibrations en créant, grâce aux premiers moyens de frottement 40, un frottement permanent faible pour amortir les vibrations dans la plage du ralenti du moteur, et, au-delà de cette plage de ralenti, de créer, grâce aux moyens de frottement 50, un frottement de plus grande intensité pour amortir les vibrations dans le régime de marche du véhicule.

Cela est favorisé par le fait que les premiers moyens de frottement 40 sont implantés au niveau du moyeu 10, c'est-à-dire sur le plus faible rayon possible, tandis que les seconds moyens de frottement 50 développent naturellement un couple plus important car ils sont implantés sur une plus grande circonférence radialement au-delà des extrémités 17 des axes 6 et des passages 22.

Tout ceci permet également d'implanter des moyens limiteurs de couple au sein de la deuxième masse du fait que les moyens de frottement 40, 50 sont portés en majeure partie ici par la première masse 1.

Ainsi, dans le but d'augmenter les performances du double volant amortisseur, la deuxième masse 2 est réalisée en deux parties 62 et 63, à savoir une seconde partie 63, constituant le plateau de réaction de l'embrayage portée par une première partie 62.

La première partie 62, par l'intermédiaire de son alésage intérieur, est montée à rotation par rapport au moyeu 10 de la première masse 1 avec interposition des moyens de roulement à billes 5. Cette première partie 62 comporte un tronçon central qui se prolonge radialement vers l'extérieur par un voile 60 qui s'étend radialement depuis la surface cylindrique extérieure 61 du tronçon central.

Cette surface cylindrique extérieure 61 constitue une surface de portée cylindrique de manière que le tronçon central constitue un moyeu qui reçoit à rotation la portion centrale en forme de voile de la seconde partie 63 de la deuxième masse 2.

Cette seconde partie 63 présente une forme générale de plateau en forme de disque annulaire qui est une pièce de fonderie, usuellement en fonte qui s'étend dans un plan transversal et qui porte la face de friction 21.

La portion centrale de la seconde partie 63 est montée avec possibilité de rotation sur la surface de portée 61 par l'intermédiaire de son alésage intérieur 64 qui permet la mise en place de ladite portion centrale axialement sur le moyeu jusqu'à ce que la portion de la face transversale intérieure de la portion centrale vienne en appui contre la zone en vis-à-vis de la face transversale extérieure du voile.

Des moyens limiteurs de couple sont interposés entre les première 62 et seconde 63 parties de la deuxième masse 2.

Les moyens limiteurs de couple sont du type à friction et de forme générale annulaire. Ils sont agencés radialement autour du tronçon central formant moyeu de la première partie 62. Ils sont constitués pour l'essentiel par la portion centrale de la seconde partie 63 et le voile 60 contre la face transversale extérieure duquel ladite portion centrale est sollicitée en appui axial.

L'effort de pression axiale de la portion centrale de la seconde partie 63, latéralement de la droite vers la gauche en considérant les figures, est exercé par une rondelle élastique 65 fixée sur le moyeu central de la première partie 62 par les axes 6.

Plus précisément, les axes 6 sont en butée axiale contre la face transversale interne de la première partie 62 de la seconde masse 2 grâce à une collerette 18 qu'ils présentent et dont le diamètre est supérieur à celui de leur extrémité 17 tournée vers la première masse 1 ; au-delà de la collerette 18, par rapport à cette extrémité 17, les axes 6 se prolongent selon une queue de fixation 20, de diamètre inférieur à celui de la collerette 18, traversant la première partie 62 de la seconde masse 2 ; l'extrémité externe de la queue de fixation 20 est conformée en rivet 23 pour la fixation par rivetage de la rondelle élastique 65 ; au droit des axes 6, la première masse 1 présente des trous 66 pour le passage d'outils de rivetage.

On a ainsi réalisé des moyens d'accouplement à friction entre les deux parties 62 et 63 de la deuxième masse tournante 2 qui sont des moyens limiteurs de couple, c'est-à-dire qu'ils permettent une rotation relative des deux parties 62 et 63 l'une par rapport à l'autre lorsque le couple appliqué à l'une des deux parties par rapport à l'autre est supérieur à une valeur de tarage déterminée par la structure des moyens d'accouplement à friction et notamment par la rondelle élastique 65.

A cet effet, la rondelle élastique 65 peut être réalisée sous la forme d'une rondelle Belleville, en variante d'un diaphragme, ou d'une rondelle ondulée.

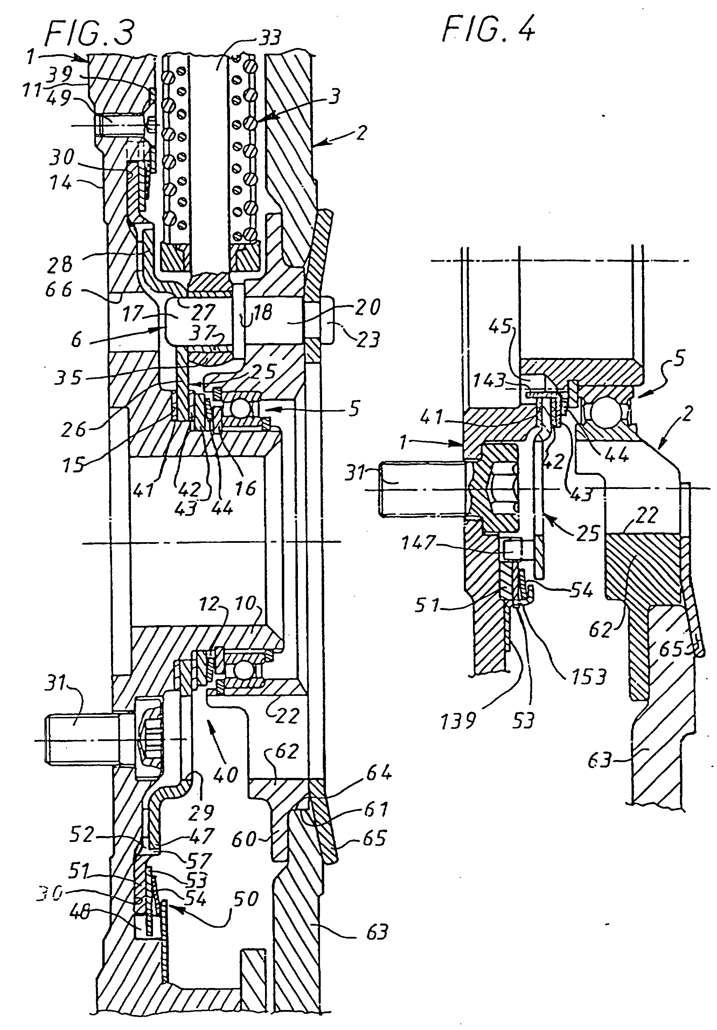

Selon la variante représentée sur la figure 4, la rondelle d'application 43 présente, pour sa solidarisation en rotation avec la première masse 1, des pattes axiales 143 qui coopèrent avec des trous 45 axiaux ménagés dans la première masse 1 ; les rondelles de frottement 41 et 42 peuvent présenter à leur périphérie interne des échancrures coopérant avec lesdites pattes axiales 143 pour être dès lors également solidaires en rotation de la première masse 1.

Selon cette même variante, la rondelle 25 présente des moyens d'engrènement, pour l'enracinement en rotation de la rondelle de frottement 51, qui sont constitués par des pattes axiales 147. Ici, la rondelle élastique 54 prend appui axialement sur un retour transversal dirigé vers l'intérieur ménagé en bout d'un retour axial 153 d'une plaque 139 annulaire solidaire de la première masse 1 ; la rondelle d'application 53 présente à sa périphérie extérieure des dents radiales qui coopèrent avec des trous ménagés dans le retour axial 153 pour sa solidarisation en rotation à la première masse 1.

Bien entendu la présente invention n'est pas limitée aux exemples de réalisation décrits.

Selon les variantes décrites et représentées, le flasque 26 de la rondelle 25 est pincé axialement entre les deux rondelles de frottement 41, 42 qui sont soit libres en rotation, figures 1 et 3, soit entraînées en rotation par la rondelle d'application 43, figure 4, la rondelle 25 étant par exemple métallique. Cet entraînement peut être réalisé après rattrapage d'un jeu.

Selon une autre variante, les rondelles de frottement 41, 42 sont fixées au flasque 26, par exemple par collage, de part et d'autre de celui-ci. Selon encore une autre variante, elles sont surmoulées à la périphérie externe dudit flasque 26. Selon encore une autre variante, c'est la rondelle 25 elle-même qui est constituée en un matériau de frottement, en étant avantageusement épaissie au niveau de ses moyens d'engrènement 47, figure 3. Les rondelles 41, 42 peuvent être, en variante, solidaires de la face 15 et de la rondelle 43.

Les moyens élastiques à action axiale 44 et/ou 54 peuvent consister en un diaphragme comme en variante en une rondelle Belleville ou en une rondelle élastique ondulée.

La rondelle 25 peut être entraînée, éventuellement après rattrapage d'un jeu, par les manchons 37 pénétrant dans les trous 27. Dans ce cas, les manchons 37 sont rallongés.

On peut remplacer les axes 6 et 7 par des tourillons venus de moulage respectivement de la seconde masse 2 et de la première masse 1, en sorte que les moyens d'articulation 6, 7 ne sont pas forcément des axes.

De même on peut prévoir des paliers à aiguilles entre les manchons 37, 38 et les axes 6, 7.

De même on peut revêtir les faces de frottement de la première masse 1, pour les rondelles de frottement 41 et 51, d'un matériau de frottement à coefficient de frottement approprié. Dans tous les cas ces faces de frottement sont tournées vers la seconde masse.

Les axes 6 peuvent être creux en étant implantés dans les passages 22. Les outils de vissage des vis 31 traversent alors les axes 6. Enfin, le palier 5, ici un roulement, peut être d'un seul tenant avec la partie 62 du fait que celle-ci doit être dure pour la création des moyens limiteurs de couple.

Dans tous les cas, du fait que la rondelle 25 est pincée de manière précitée par les premiers moyens de frottement 40, on peut créer un sous-ensemble comportant la première masse 1, les moyens de frottement 40, 50, et les moyens élastiques 3, puis monter la seconde masse 2 avec le roulement 5 sur la première masse 1 en enfilant les axes 6 dans les passages 29 et les trous des pièces d'articulation 35.

Bien entendu, le roulement 5 peut être monté par avance sur la première masse 1. Dans tous les cas, le circlips 16 permet de rendre solidaire par avance les premiers moyens de frottement 40 du moyeu 10 et donc de la première masse 1.

## Revendications

1. Volant amortisseur, notamment pour véhicules automobiles, comportant deux masses coaxiales (1,2) montées mobiles l'une par rapport à l'autre à l'encontre, d'une part, de moyens élastiques (3) comportant au moins un organe élastique (34) intervenant globalement radialement entre lesdites masses et monté à articulation sur l'une et l'autre de celles-ci, et, d'autre part, de moyens de frottement à action axiale (4), dans lequel l'une (1) des masses (1, 2), dite première masse, est propre à être calée en rotation sur un arbre menant, tandis que l'autre (2) des masses (1, 2) constitue le plateau de réaction d'un embrayage, les deux masses (1, 2) étant montées mobiles l'une par rapport à l'autre à l'aide d'un palier (5), et lesdits moyens de frottement à action axiale (4) étant adaptés à coopérer en frottement avec au moins une face de frottement (15, 30) solidaire de l'une des masses (1 , 2), **caractérisé par le fait que** les moyens de frottement comprennent des premiers moyens de frottement (40) et des seconds moyens de frottement (50), les premiers moyens de frottement (40) étant proches de l'axe de l'ensemble au voisinage dudit palier (5), les moyens de frottement (4) étant portés en majeure partie par l'une des masses (1, 2) et en ce que les premiers moyens de frottement (40) comprennent une rondelle (25) pour la mise en oeuvre des seconds moyens de frottement (50), ladite rondelle étant adaptée à être entraînée en rotation par l'autre des masses (1, 2).

2. Volant amortisseur selon la revendication 1, **caractérisé par le fait que** ladite l'une des masses est la première masse (1) et ladite l'autre des masses est la seconde masse (2).

3. volant amortisseur selon l'une au moins des revendications 1 ou 2, **caractérisé par le fait que** les premiers (40) et les seconds (50) moyens de frottement comprennent chacun une rondelle élastique (44, 54) à action axiale.

4. Volant amortisseur selon la revendication 3, **caractérisé par le fait que** la charge de la rondelle élastique (44) associée aux premiers moyens de frottement (40) est inférieure à la charge de la rondelle élastique (54) associée aux seconds moyens de frottement (50).

5. Volant amortisseur selon l'une au moins des revendications 1 à 4, **caractérisé par le fait que** les seconds moyens de frottement (50) comprennent une rondelle de frottement (51) appliquée contre ladite face de frottement (30) par l'intermédiaire d'une rondelle d'application (53) solidaire en rotation de ladite l'une des masses (1, 2).

6. Volant amortisseur selon la revendication 5, **caractérisé par le fait que** ladite rondelle (25) des premiers moyens de frottement (40) et ladite rondelle de frottement (51) comportent des moyens d'engrènement (47, 147 - 57).

7. Volant amortisseur selon la revendication 6, **caractérisé par le fait que** les moyens d'engrènement (47, 147-57) engrènent avec un jeu circonférentiel.

8. Volant amortisseur selon l'une au moins des revendications 1 à 7, **caractérisé par le fait que** les seconds moyens de frottement (50) sont placés axialement entre ladite face de frottement (30) et les moyens élastiques (3).

9. Volant amortisseur selon l'une au moins des revendications 1 à 8, **caractérisé par le fait que** la rondelle (25) des premiers moyens de frottement (40) est sollicitée axialement par l'intermédiaire d'une rondelle d'application (43) vers ladite face de frottement (1 5).

10. Volant amortisseur selon la revendication 9, **caractérisé par le fait que** des' rondelles de frottement (41, 42) sont disposées de part et d'autre de la rondelle (25) des premiers moyens de frottement (40).

11. Volant amortisseur selon l'une au moins des revendications 1 à 10, **caractérisé par le fait que** les moyens élastiques (3) sont montés à articulation à l'aide de moyens d'articulation en forme d'axes (6, 7) portés par chacune des deux masses (1, 2).

12. Volant amortisseur selon la revendication 11, **caractérisé par le fait que** la rondelle (25) des premiers moyens de frottement (40) est entraînée en rotation par l'extrémité des axes (6) les plus proches de l'axe de l'ensemble.

13. Volant amortisseur selon la revendication 12, **caractérisé par le fait que** ladite rondelle (25) est entraînée en rotation par un flasque (26) transversal qu'elle présente, ses moyens d'engrènement (47, 147) étant prévus à l'extrémité externe de son bord (28) qui est déporté axialement par rapport audit flasque (26).

14. Volant amortisseur selon l'une au moins des revendications 1 à 13, **caractérisé par le fait que** la première masse (1) est solidarisée en rotation avec l'arbre menant par des vis (31), les seconds moyens de frottement (50) sont disposés radialement au-delà desdites vis (31), et la seconde masse (2) et la rondelle (25) présentent des passages (22, 29) pour le passage d'un outil de serrage ou desserrage des vis (31).

## Claims

1. A damped dual flywheel, especially for motor vehicles, comprising two coaxial masses (1, 2) mounted for movement of one with respect to the other against the action of, firstly, resilient means (3) comprising at least one resilient member (34) operatively interposed generally radially between the said masses and articulated on both of the latter, and, secondly, axially-acting friction means (4), wherein one (1) of the masses (1, 2), referred to as the first mass, is arranged to be mounted on a driving shaft for rotation therewith, while the other one (2) of the masses (1, 2) is the reaction plate of a clutch, the two masses being mounted for movement of one with respect to the other with the aid of a bearing (5), and the said axially-acting friction means (4) being adapted to cooperate frictionally with at least one friction face (15, 30) which is fixed with respect to one of the masses (1, 2), **characterised by** the fact that the friction means comprise first friction means (40) and second friction means (50), the first friction means (40) being close to the axis of the assembly in the vicinity of the said bearing (5), the friction means (4) being carried mostly one of the masses (1, 2), and in that the first friction means (40) comprise a ring (25) for activating the second friction means (50), the said ring being adapted to be driven in rotation by the other one of the masses (1, 2).

2. A damped dual flywheel according to Claim 1, **characterised by** the fact that the said one of the masses is the first mass (1), and the said other one of the masses is the second mass (2).

3. A damped dual flywheel according to at least one of Claims 1 and 2, **characterised by** the fact that each of the first friction means (40) and the second friction means (50) comprises an axially-acting resilient ring (44, 54).

4. A damped dual flywheel according to Claim 3, **characterised by** the fact that the force exerted by the friction ring (44) associated with the first friction means (40) is smaller than the force exerted by the resilient ring (54) associated with the second friction means (50).

5. A damped dual flywheel according to at least one of Claims 1 to 4, **characterised by** the fact that the second friction means (50) comprise a friction ring (51) which is applied against the said friction face (30) by an interposed application ring (53) fixed to the said one of the masses (1, 2) for rotation therewith.

6. A damped double flywheel according to Claim 5, **characterised by** the fact that the said ring (25) of the first friction means (40), and the said friction ring (51), include meshing means (47, 147-57).

7. A damped dual flywheel according to Claim 6, **characterised by** the fact that the meshing means (47, 147-57) mesh with a circumferential clearance.

8. A damped dual flywheel according to at least one of Claims 1 to 7, **characterised by** the fact that the second friction means (50) are disposed axially between the said friction face (30) and the resilient means (3).

9. A damped dual flywheel according to at least one of Claims 1 to 8, **characterised by** the fact that the ring (25) of the first friction means (40) is biased sxially towards the said friction face (15) by an interposed application ring (43).

10. A damped double flywheel according to Claim 9, **characterised by** the fact that the Triction rings (41, 42) are disposed on either side of the ring (25) of the first friction means (40).

11. A damped double flywheel according to at least one of Claims 1 to 10, **characterised by** the fact that the resilient means (3) are articulated with the aid of articulating means in the form of pins (6, 7) carried by each of the two masses (1, 2).

12. A damped double flywheel according to Claim 11, **characterised by** the fact that the ring (25) of the first friction means (40) is driven in rotation by the ends of the pins (6) nearest to the axis of the assembly.

13. A damped double flywheel according to Claim 12, **characterised by** the fact that the said ring (25) is driven in rotation through a transverse plate portion (26) which it includes, its meshing means (47, 147) being arranged at the outer end of its edge portion (28) which is offset axially with respect to the said plate portion (26).

14. A damped double flywheel according to at least one of Claims 1 to 13, **characterised by** the fact that the first mass (1) is fixed to the driving shaft, for rotation therewith, by means of screws (31), the second friction means (50) being disposed radially outside the said screws (31), and the second mass (2) and ring (25) having passages (22, 29) for passage of a tool for tightening and loosening the screws (31).

## Patentansprüche

1. Dämpfungsschwungrad, insbesondere für Kraftfahrzeuge, umfassend zwei koaxiale Massen (1, 2), die im Verhältnis zueinander beweglich einerseits entgegen elastischen Mitteln (3) mit wenigstens einem elastischen Organ (34), das insgesamt radial zwischen den besagten Massen zum Einsatz kommt und gelenkig an der einen und der anderen dieser Massen gelagert ist, und andererseits entgegen axial wirksamen Reibungsmitteln (4) gelagert sind, wobei eine (1) der Massen (1, 2), die als erste Masse bezeichnet wird, drehfest mit einer treibenden Welle verbindbar ist, während die andere (2) der Massen (1, 2) die Gegenanpreßplatte einer Kupplung bildet, wobei die beiden Massen (1, 2) mit Hilfe eines Lagers (5) beweglich zueinander gelagert sind und wobei die besagten axial wirksamen Reibungsmittel (4) reibschlüssig wenigstens mit einer fest mit einer der Massen (1, 2) verbundenen Reibfläche (15, 30) zusammenwirken können,
**dadurch gekennzeichnet,**
**daß** die Reibungsmittel erste Reibungsmittel (40) und zweite Reibungsmittel (50) umfassen, wobei die ersten Reibungsmittel (40) nahe an der Achse der Baueinheit in der Nähe des besagten Lagers (5) angeordnet sind, wobei die Reibungsmittel (4) größtenteils an einer der Massen (1, 2) angebracht sind, und daß die ersten Reibungsmittel (40) eine Scheibe (25) für die Betätigung der zweiten Reibungsmittel (50) umfassen, wobei die besagte Scheibe durch die andere der Massen (1, 2) drehend antreibbar ist.

2. Dämpfungsschwungrad nach Anspruch 1, **dadurch gekennzeichnet, daß** die besagte eine der Massen die erste Masse (1) ist und die besagte andere der Massen die zweite Masse (2) ist.

3. Dämpfungsschwungrad nach Anspruch 1 oder 2, **dadurch gekennzeichnet, daß** die ersten (40) und die zweiten (50) Reibungsmittel jeweils eine axial wirksame Federscheibe (44, 54) umfassen.

4. Dämpfungsschwungrad nach Anspruch 3, **dadurch gekennzeichnet, daß** die Belastung der zu den ersten Reibungsmitteln (40) gehörenden Federscheibe (44) kleiner als die Belastung der zu den zweiten Reibungsmitteln (50) gehörenden Federscheibe (54) ist.

5. Dämpfungsschwungrad nach wenigstens einem der Ansprüche 1 bis 4, **dadurch gekennzeichnet, daß** die zweiten Reibungsmittel (50) eine Reibscheibe (51) umfassen, die über eine drehfest mit der besagten einen der Massen (1, 2) verbundene Anpreßscheibe (53) gegen die besagte Reibfläche (30) angedrückt wird.

6. Dämpfungsschwungrad nach Anspruch 5, **dadurch gekennzeichnet, daß** die besagte Scheibe (25) der ersten Reibungsmittel (40) und die besagte Reibscheibe (51) Eingriffsmittel (47, 147 - 57) umfassen.

7. Dämpfungsschwungrad nach Anspruch 6, **dadurch gekennzeichnet, daß** die Eingriffsmittel (47, 147 - 57) mit einem Umfangsspiel in Eingriff kommen.

8. Dämpfungsschwungrad nach wenigstens einem der Ansprüchen 1 bis 7, **dadurch gekennzeichnet, daß** die zweiten Reibungsmittel (50) axial zwischen der besagten Reibfläche (30) und den elastischen Mitteln (3) angebracht sind.

9. Dämpfungsschwungrad nach wenigstens einem der Ansprüche 1 bis 8, **dadurch gekennzeichnet, daß** die Scheibe (25) der ersten Reibungsmittel (40) über eine Anpreßscheibe (43) zu der besagten Reibfläche (15) hin axial beaufschlagt wird.

10. Dämpfungsschwungrad nach Anspruch 9, **dadurch gekennzeichnet, daß** Reibscheiben (41, 42) beiderseits der Scheibe (25) der ersten Reibungsmittel (40) angeordnet sind.

11. Dämpfungsschwungrad nach wenigstens einem der Ansprüche 1 bis 10, **dadurch gekennzeichnet, daß** die elastischen Mittel (3) mit Hilfe von an jeder der beiden Massen (1, 2) angebrachten Gelenkmitteln in Form von Achsen (6, 7) gelenkig gelagert sind.

12. Dämpfungsschwungrad nach Anspruch 11, **dadurch gekennzeichnet, daß** die Scheibe (25) der ersten Reibungsmittel (40) durch das Ende der am nächsten an der Achse der Baueinheit befindlichen Achsen (6) drehend angetrieben wird.

13. Dämpfungsschwungrad nach Anspruch 12, **dadurch gekennzeichnet, daß** die besagte Scheibe (25) durch einen Querflansch (26), den sie aufweist, drehend angetrieben wird, wobei ihre Eingriffsmittel (47, 147) am äußeren Ende ihres Rands (28) vorgesehen sind, der im Verhältnis zu dem besagten Flansch (26) axial versetzt ist.

14. Dämpfungsschwungrad nach wenigstens einem der Ansprüche 1 bis 13, **dadurch gekennzeichnet, daß** die erste Masse (1) durch Schrauben (31) drehfest mit der treibenden Welle verbunden ist, wobei die zweiten Reibungsmittel (50) radial jenseits der besagten Schrauben (31) angeordnet sind und die zweite Masse (2) und die Scheibe (25) Durchgänge (22, 29) für die Durchführung eines Werkzeugs zum Anziehen oder Lösen der Schrauben (31) aufweist.
